# DEMANDE DE BREVET EUROPEEN

(11) **EP 4 212 348 A1**
(43) Date de publication de la demande: **19.07.2023**
(21) Numéro de dépôt: 22210645.2
(22) Date de dépôt: 30.11.2022
(51) Int. Cl.: B42D 25/324, B42D 25/328, B42D 25/346, B42D 25/351, B42D 25/41, B42D 25/425, B42D 25/435, B42D 25/455, B42D 25/46

(54) **DISPOSITIF OPTIQUE AVEC COUCHE HOLOGRAPHIQUE**

(30) Priorité: 13.12.2021 FR 2113404
(71) Demandeur: IDEMIA France, 92400 Courbevoie (FR)
(72) Inventeur: BOULET, Romain, Courbevoie (FR); SEGEREN, Leon, Courbevoie (FR); AZUELOS, Paul, Courbevoie (FR)
(74) Mandataire: Cabinet Beau de Loménie

(57) **Abrégé**

L'invention vise un dispositif optique (2) et un procédé de fabrication correspondant, le dispositif comprenant : une couche texturée (4) comprenant en surface (4a) des premières macro-texturations (10); et un support (6) comprenant en surface une couche holographique (8) intercalée entre la couche texturée (4) et le support (6). La couche holographique comprend un réseau diffractif formant par effet holographique un arrangement (15) de pixels (16) dans une base (BC) d'au moins deux couleurs distinctes. La couche texturée (4) est assemblée par lamination avec le support (6) de sorte que la couche holographique (8), disposée entre la couche texturée et le support, est déformée par les premières macro-texturations (10) pour comprendre des deuxièmes macro-texturations (11) conformes aux premières macro-texturations, l'apparence visuelle de l'arrangement (15) de pixels (16) étant personnalisée par les deuxièmes macro-texturations (11).

## Description

### Domaine Technique

L'invention se rapporte au domaine des images holographiques et porte notamment sur des dispositifs optiques configurées pour former une image holographique à partir d'un arrangement de pixels. L'invention vise notamment de tels dispositifs optiques aptes à être intégrés dans un document ou un quelconque autre support pour servir de dispositif de sécurité.

### Technique antérieure

Le marché de l'identité requiert aujourd'hui des documents d'identité (dits aussi documents identitaires) de plus en plus sécurisés. Ces documents doivent être facilement authentifiables et difficiles à contrefaire (si possible infalsifiables). Ce marché concerne des documents très diverses, tels que cartes d'identité, passeports, badges d'accès, permis de conduire etc., qui peuvent se présenter sous différents formats (cartes, livrets...).

Divers types de documents sécurisés comportant des images ont ainsi été développés au cours du temps, notamment pour identifier de manière sécurisée des personnes. De plus en plus de passeports, cartes d'identité ou autres documents officiels comportent aujourd'hui des éléments de sécurité qui permettent d'authentifier le document et de limiter les risques de fraudes, falsification ou contrefaçon. Les documents identitaires électroniques comportant une carte à puce, tels que les passeports électroniques par exemple, connaissent ainsi un essor important ces dernières années.

Diverses techniques d'impression ont été développées au fil du temps pour réaliser des impressions d'image, en noir et blanc ou en couleur. La réalisation en particulier de documents identitaires tels que ceux précités nécessitent de réaliser des images de façon sécurisée afin de limiter les risques de falsification par des individus malveillants. La fabrication de tels documents, au niveau en particulier de l'image d'identité du porteur, nécessite d'être suffisamment complexe pour rendre difficile la reproduction ou falsification par un individu non autorisé.

Une autre technique connue de formation d'image concerne les hologrammes, ce type d'image pouvant notamment être utilisé pour sécuriser un document ou autre. En inspectant par exemple une image holographique sous une certaine illumination, il est possible de vérifier l'authenticité de l'image et ainsi déterminer si l'objet auquel elle est associée est authentique ou non.

Les dispositifs optiques connus à ce jour, et plus particulièrement ceux configurés pour former des images holographiques, ne sont toutefois pas toujours satisfaisants. Un besoin existe pour former de façon sécurisée des images personnalisées de haute qualité (en couleurs ou en noir et blanc), notamment pour servir de dispositifs de sécurité dans des documents (documents identitaires, documents officiels, etc.) ou tout autre objet nécessitant d'être sécurisé. Un besoin existe en particulier pour permettre une personnalisation flexible et sécurisée d'images couleurs, ou en noir et blanc (en niveaux de gris), de sorte que l'image ainsi produite soit difficile à falsifier ou à reproduire et puisse être authentifiée de façon fiable et sécurisée.

Un besoin existe en particulier pour une technique de formation d'image offrant un niveau élevé de sécurité et de flexibilité de fabrication ainsi qu'un bon niveau de qualité d'image, en termes notamment de luminosité de l'image et de gamut de couleur, par exemple lorsque des zones d'image doivent présenter un niveau hautement saturé dans une couleur donnée.

Par ailleurs, pour bien séparer les longueurs d'onde, les réseaux diffractifs holographiques imposent généralement des angles d'illumination relativement faibles de la lumière incidente. De plus, l'angle de visualisation est généralement restreint pour visualiser l'image holographique avec de bonnes couleurs. Au-delà d'un certain angle d'observation, l'observateur ne voit plus correctement l'image holographique.

En raison de la vision stéréoscopique des humains, il est généralement difficile pour un observateur de visualiser correctement une image holographique. En particulier il est difficile de trouver le bon angle d'illumination et le bon angle d'observation, d'autant plus en raison du fait que chaque œil de l'observateur visualise l'image suivant un plan légèrement différent. Si l'hologramme n'est pas illuminé et visualisé selon le bon couple d'angles (illumination, visualisation), l'observateur ne voit pas, ou mal, les couleurs de l'image holographique.

Un besoin existe donc également pour des images holographiques de bonne qualité autorisant des plages d'angles d'illumination et d'angles d'observation plus importantes.

### Exposé de l'invention

A cet effet, la présente invention concerne un dispositif optique comprenant :
- une couche texturée comprenant une première surface présentant des premières macro-texturations; et
- un support comprenant en surface une couche holographique intercalée entre la couche texturée et le support, la couche holographique comprenant un réseau diffractif formant par effet holographique un arrangement de pixels dans une base d'au moins deux couleurs distinctes,
la première surface de la couche texturée étant assemblée par lamination avec le support de sorte que la couche holographique, disposée entre la couche texturée et le support, est déformée par les premières macro-texturations pour comprendre des deuxièmes macro-texturations conformes auxdites premières macro-texturations, l'apparence visuelle de l'arrangement de pixels étant personnalisée par les deuxièmes macro-texturations.

Selon une caractéristique générale, les deuxièmes macro-texturations de la couche holographique sont de forme semi-cylindrique ou elliptique et s'étendent selon une première orientation dans le plan de la couche holographique,

chaque pixel étant formé par une portion correspondante du réseau diffractif, ladite portion correspondante étant structurée en lignes diffractives s'étendant selon une deuxième orientation perpendiculaire à la première orientation dans le plan de la couche holographique.

Le dispositif optique de l'invention permet de former une image holographique personnalisée de haute qualité et sécurisée, et ce à partir d'une couche holographique qui est configurée pour former un arrangement de pixels et qui est en outre déformée par lamination avec une couche texturée de sorte à personnaliser l'apparence visuelle de l'arrangement de pixels.

Le réseau diffractif de la couche holographique peut s'étendre intrinsèquement (avant la lamination) dans un seul plan (sous la forme par exemple d'une couche mince 2D). La formation des deuxièmes macro-texturations confère au réseau diffractif une orientation modifiée suivant une troisième dimension (non plane). Grâce à cette macro-texturation, on peut donc répartir l'orientation de la diffraction autour de l'axe perpendiculaire au réseau de diffraction, et ainsi créer divers motifs dans l'arrangement de pixels pour obtenir une image holographique personnalisée.

Le dispositif optique de l'invention est difficile à reproduire ou falsifier et peut être authentifié de façon fiable et sécurisée. L'authentification du dispositif optique peut être réalisée en analysant le motif des deuxièmes macro-texturations formées dans la couche holographique et en vérifiant la position ou l'alignement de ce motif par rapport à l'arrangement de pixels.

Aussi, l'invention trouve une application particulière notamment dans les dispositifs de sécurité aptes à être associés à un document ou tout autre objet en vue de le sécuriser (par exemple des documents identitaires, documents officiels ou autres). L'invention permet en particulier de former des dispositifs de sécurité personnalisés à bas coût et permettant de sécuriser efficacement un document ou autre.

La formation des deuxièmes macro-texturations par lamination dans la couche holographique permet également d'obtenir une plage importante d'angles d'observation dans laquelle un observateur peut visualiser l'image holographique personnalisée produite par le dispositif optique, comme décrit plus en détail ci-après dans des exemples particuliers.

Selon un mode de réalisation particulier, les premières et deuxièmes macro-texturations présentent une hauteur comprise entre 1 µm et 100 µm.

Selon un mode de réalisation particulier, les pixels du réseau diffractif sont au moins en partie arrangés de sorte à former des lignes de pixels chacune dans une couleur unique parmi la base d'au moins deux couleurs distinctes, les lignes de pixels s'étendant selon la deuxième orientation.

Selon un mode de réalisation particulier, les lignes de pixels sont arrangées de façon périodique dans la couche holographique.

Selon un mode de réalisation particulier, les lignes de pixels sont arrangées par groupe de lignes de pixels dans chaque couleur parmi la base d'au moins deux couleurs distinctes, chaque groupe comprenant une pluralité de lignes de pixels dans une même couleur parmi ladite base d'au moins deux couleurs distinctes,
les lignes de pixels étant arrangées périodiquement dans chaque groupe.

Selon un mode de réalisation particulier, les lignes de pixels sont arrangées spatialement dans chaque dit groupe selon un pas séparant chaque paire de lignes de pixels adjacentes, tel que P ≤ 100 µm.

Selon un mode de réalisation particulier, la couche texturée présente une température de transition vitreuse supérieure ou égale à celle du support.

Selon un mode de réalisation particulier, la couche texturée et le support sont formés d'un même matériau ou d'un même ensemble de matériaux.

Selon un mode de réalisation particulier, la couche holographique se caractérise par des propriétés optiques de diffraction qui sont fonction des deuxièmes macro-texturations formées par lamination selon un motif en relief imposé par les premières macro-texturations de la couche texturée.

Selon un mode de réalisation particulier, les pixels dudit arrangement de pixels comportent chacun une pluralité de sous-pixels de couleurs distinctes dans la base d'au moins deux couleurs distinctes,
le dispositif comprenant une couche de personnalisation positionnée en regard de la couche holographique,
dans lequel la couche holographique comprend des perforations formées par un rayonnement laser, lesdites perforations révélant localement au travers de la couche holographique des zones de nuance colorimétrique dans les sous-pixels causées par des régions sous-jacentes, de la couche de personnalisation, situées en regard des perforations, de sorte à former une image holographique personnalisée à partir de l'arrangement de pixels combiné aux zones de nuance colorimétrique.

Selon un mode de réalisation particulier, la couche de personnalisation est l'une parmi :
- la couche texturée ; et
- une couche positionnée en regard de la couche holographique de sorte que la couche texturée est intercalée entre la couche holographique et la couche de personnalisation.

Selon un mode de réalisation particulier, ladite couche de personnalisation est opaque vis-à-vis au moins du spectre de longueurs d'onde du visible, les zones de nuance colorimétrique causées par les régions sous-jacentes de la couche de personnalisation étant des zones sombres dans les sous-pixels

Selon un mode de réalisation particulier, chaque pixel dudit arrangement de pixels forme un motif identique de sous-pixels de couleur dans la base d'au moins deux couleurs.

Selon un mode de réalisation particulier, la couche de personnalisation comporte une encre sensible aux ultraviolets, de sorte que l'image holographique personnalisée est visible lorsque le dispositif est exposé à des ultraviolets.

Selon un mode de réalisation particulier, la couche de personnalisation est transparente vis-à-vis au moins du spectre de longueurs d'onde du visible, les zones de nuance colorimétrique causées par les régions sous-jacentes de la couche de personnalisation étant des zones claires dans les sous-pixels lorsqu'une lumière incidente dans le spectre du visible est projetée au travers des perforations.

Corrélativement, la présente invention concerne un document sécurisé comprenant un corps de document et un dispositif optique tel que défini ci-avant et décrit ci-après dans des modes de réalisation particuliers. Le dispositif optique peut ainsi être intégré en tant que dispositif de sécurité dans ou sur le corps de document.

La présente invention vise également un procédé de fabrication correspondant, à savoir un procédé pour fabriquer un dispositif optique tel que défini ci-avant et décrit ci-après dans des modes de réalisation particuliers. En particulier, l'invention prévoit un procédé de fabrication d'un dispositif optique, ledit procédé comprenant :
- formation d'une couche texturée comprenant une première surface présentant des premières macro-texturations; et
- positionnement de la première surface de la couche texturée en vis-à-vis d'un support comprenant en surface une couche holographique intercalée entre la couche texturée et le support,
- la couche holographique comprenant un réseau diffractif formant par effet holographique un arrangement de pixels dans une base d'au moins deux couleurs distinctes ; et
- lamination de la première surface de la couche texturée sur le support, causant une déformation par les premières macro-texturations de la couche holographique disposée entre la couche texturée et le support, de sorte à former dans la couche holographique des deuxièmes macro-texturations conformes auxdites premières macro-texturations, l'apparence visuelle de l'arrangement de pixels étant personnalisée par les deuxièmes macro-texturations.

Selon une caractéristique générale, les deuxièmes macro-texturations de la couche holographique sont de forme semi-cylindrique ou elliptique et s'étendent selon une première orientation dans le plan de la couche holographique,

chaque pixel étant formé par une portion correspondante du réseau diffractif, ladite portion correspondante étant structurée en lignes diffractives s'étendant selon une deuxième orientation perpendiculaire à la première orientation dans le plan de la couche holographique.

A noter que les différents modes de réalisation mentionnés ci-avant (ainsi que ceux décrits ci-après) en relation avec le dispositif optique de l'invention ainsi que les avantages associés s'appliquent de façon analogue au procédé de fabrication de l'invention.

Selon un mode de réalisation particulier, lors de la formation de la couche texturée, les premières macro-texturations de la couche texturée sont formées au laser ou par une technique de moulage par thermo-compression.

L'invention concerne également un procédé de fabrication d'un document sécurisé tel que précédemment défini.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement les éléments constitutifs d'un dispositif optique en cours de fabrication selon au moins un mode de réalisation de l'invention ;
[Fig. 2] La figure 2 représente schématiquement la structure d'un dispositif optique selon au moins un mode de réalisation de l'invention ;
[Fig. 3] La figure 3 représente schématiquement la structure de la couche holographique d'un dispositif optique selon au moins un mode de réalisation de l'invention ;
[Fig. 4] La figure 4 représente un dispositif optique selon au moins un mode de réalisation de l'invention ;
[Fig. 5A-5B] Les figures 5A et 5B sont des vues de haut représentant une région de la couche holographique d'un dispositif optique respectivement avant et après lamination, selon des modes de réalisation de l'invention ;
[Fig. 6] La figure 6 représente un document sécurisé comprenant un dispositif optique selon au moins un mode de réalisation de l'invention ;
[Fig. 7A-7B-7C] La figure 7A représente schématiquement la couche holographique d'un dispositif optique avant lamination selon un mode de réalisation de l'invention, et les figures 7B et 7C représentent schématiquement la couche holographique d'un dispositif optique après lamination selon des modes de réalisation de l'invention ;
[Fig. 8] La figure 8 représente un dispositif optique de l'invention selon au moins un mode de réalisation de l'invention ;
[Fig. 9] La figure 9 représente un dispositif optique de l'invention selon au moins un mode de réalisation de l'invention ;
[Fig. 10] La figure 10 représente, sous forme d'un diagramme, les étapes d'un procédé de fabrication selon certains modes de réalisation de l'invention ;
[Fig. 11] La figure 11 représente, sous forme d'un diagramme, les étapes d'un procédé de fabrication selon certains modes de réalisation de l'invention ; et
[Fig. 12] La figure 12 représente schématiquement la formation d'une couche texturée lors d'un procédé de fabrication selon au moins un mode de réalisation de l'invention.

### Description des modes de réalisation

Comme déjà indiqué, l'invention concerne un dispositif optique configuré pour former de façon sécurisée une image holographique de haute qualité, pouvant éventuellement être authentifiée par un observateur ou une entité tierce. Pour ce faire, l'invention met en oeuvre une technique de transfert de texturation pour transférer par lamination des macro-texturations depuis une couche texturée vers une couche holographique, cette dernière comprenant un (ou au moins un) réseau diffractif configuré pour former par effet holographique un arrangement de pixels dans une base de couleurs. Ce transfert de texturation est réalisé en déformant la couche holographique par lamination avec la couche texturée de sorte à ce que la couche holographique forme ou adopte en surface des macro-texturations qui modifient ses propriétés optiques de diffraction, ce qui conduit à une personnalisation de l'arrangement de pixels, et donc de l'effet visuel (ou apparence visuelle) produit par la couche holographique.

L'invention, selon ses différents modes de réalisation, met ainsi en oeuvre un dispositif optique comprenant : une couche texturée comprenant une première surface présentant des premières macro-texturations; et un support comprenant en surface une couche holographique intercalée entre la couche texturée et le support, la couche holographique comprenant un (ou au moins un) réseau diffractif formant par effet holographique un arrangement de pixels dans une base d'au moins deux couleurs distinctes. La première surface de la couche texturée est assemblée par lamination avec le support de sorte que la couche holographique, disposée entre la couche texturée et le support, est déformée par les premières macro-texturations pour comprendre des deuxièmes macro-texturations conformes auxdites premières macro-texturations, l'apparence visuelle de l'arrangement de pixels étant personnalisée par les deuxièmes macro-texturations.

L'invention s'applique aussi bien à la formation d'images holographiques en couleurs que des images holographiques en noir et blanc, c'est-à-dire en niveaux de gris. Aussi, dans le présent document, la notion de couleur peut s'appliquer par extension aux niveaux de gris d'une image en noir et blanc.

Dans ce document, la notion de « macro-texturation » désigne des reliefs formés en surface d'un matériau (par exemple en polycarbonate pour un document d'identité) par un procédé de formation approprié permettant de déformer la surface de ce matériau (par exemple, au moyen d'une technique de déformation au laser CO₂, par lamination...), les propriétés de forme et de résistance mécanique des reliefs ainsi obtenus permettant un transfert de reliefs par lamination (quantifiable et ajustable) vers une autre surface. Ainsi, comme décrit par la suite, un transfert de texturations (ou macro-texturations) est possible depuis une première surface comprenant des premières macro-texturations vers une deuxième surface, à savoir celle d'une couche optiquement active disposée en vis-à-vis de la première surface.

Comme expliqué ci-après, il est ainsi possible d'obtenir une image holographique personnalisée de haute qualité, en couleur ou en noir & blanc, qui est sécurisée car difficile à falsifier ou reproduire, et facile à authentifier, et donc robuste aux risques de fraudes falsification ou contrefaçon. Divers motifs de reliefs des premières macro-texturations peuvent être utilisés pour adapter les deuxièmes macro-texturations formées dans la couche holographique en fonction notamment de l'effet visuel et du niveau de complexité désiré.

L'invention concerne également un document sécurisé comprenant le dispositif optique de l'invention, ainsi qu'un procédé de fabrication d'un tel dispositif optique. D'autres aspects et avantages de la présente invention ressortiront des exemples de réalisation décrits ci-dessous en référence aux dessins mentionnés ci-avant.

Dans ce document, des exemples de mise en œuvre de l'invention sont décrits dans le cadre d'un dispositif optique apte à servir de dispositif de sécurité vis-à-vis d'un document ou autre support quelconque auquel il est associé (voir auquel il est intégré). L'invention ne se limite toutefois pas aux seuls exemples de réalisation décrits ci-après et peut s'appliquer plus généralement à la formation d'un dispositif optique configuré pour produire une image holographique personnalisée de haute qualité et sécurisée à partir d'une couche holographique déformée par lamination avec une couche texturée.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Les termes « premier(s) » (ou première(s)), « deuxième(s) », etc. sont utilisés dans ce document par convention arbitraire pour permettre d'identifier et de distinguer différents éléments (telles que des couches, macro-texturations, etc..) mis en œuvre dans les modes de réalisation décrits ci-après.

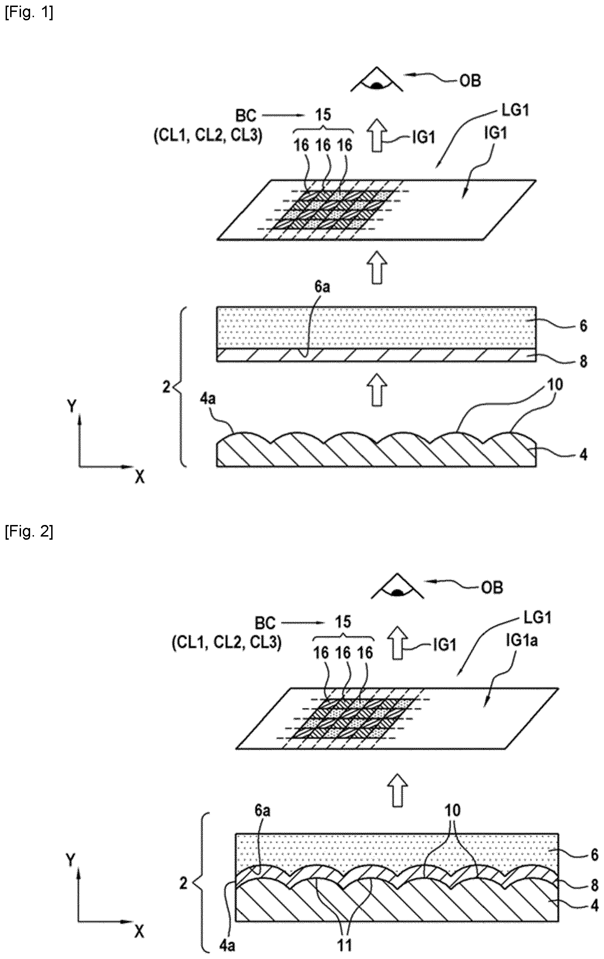

Les **figures 1** et **2** représentent schématiquement la structure d'un dispositif optique 2 selon un mode de réalisation particulier de l'invention. Comme illustré en **figures 1-2****,** le dispositif optique 2 comprend une couche texturée 4, un support 6 et une couche holographique 8.

Comme décrit en détail ci-après, le dispositif optique 2 est fabriqué à partir d'une lamination de la couche texturée 4 avec le support 6 de sorte à ce que la couche holographique 8 soit intercalée entre la couche texturée 4 et le support 6. La **figure** 1 représente les éléments intrinsèques constitutifs du dispositif optique 2 avant l'étape de lamination ainsi que l'image holographique intrinsèque IG1 formée intrinsèquement par la couche holographique 8 avant lamination. La **figure** 2 représente le dispositif optique 2 formé suite à la lamination, ainsi qu'une image holographique personnalisée (ou image finale) IG1a produite par le dispositif optique 2 suite à la déformation par lamination de la couche holographique 6.

Plus particulièrement, la couche texturée 4 comprend une première surface 4a, à savoir la face supérieure dans cet exemple, cette première surface 4a présentant des premières macro-texturations notées 10. Ces premières macro-texturations 10 sont des reliefs, présents en surface de la couche texturée 4, dont les formes et dimensions peuvent être adaptées selon le cas. Comme décrit ci-avant après, ces premières macro-texturation 10 sont destinées à déformer par lamination la couche holographique 8 afin de créer dans cette dernière des deuxièmes macro-texturations 11 qui constituent une texturation conforme ou complémentaire aux premières macro-texturations 10. Les premières macro-texturations 10 de la couche texturée 4 peuvent former un motif particulier (motif en relief) destiné à être transféré sur la couche holographique 8 comme décrit ci-après.

Comme indiqué ci-après, les premières macro-texturations 10 présentent par exemple une hauteur comprise entre 1 µm et 100 µm. La configuration en nombre, taille, forme, etc. des premières macro-texturations 10 peut être adaptée par l'homme du métier en fonction de l'effet visuel recherché.

Les premières macro-texturations 10 sont uniformes ou régulières, ici des reliefs semi-cylindriques ou semi-sphériques, pouvant être arrangés de façon périodique, comme décrit ultérieurement.

Selon un exemple particulier, les premières macro-texturations 10 sont macro-texturations irrégulières ou aléatoires. Pour ce faire, la surface 4a de la couche texturée 4 est par exemple une surface non usinée ou n'ayant subi aucun traitement particulier afin de lui garantir un état de surface irrégulier ou rugueux

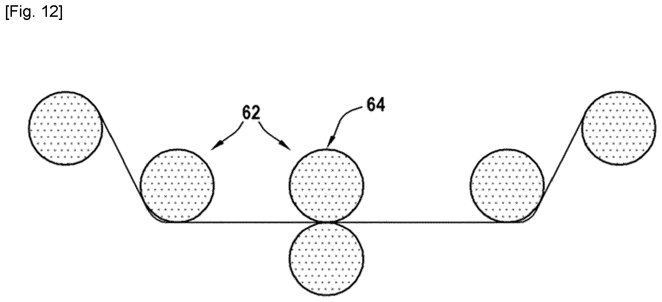

Les premières macro-texturations 10 peuvent être formées de diverses manières, par exemple au laser (au moyen d'un laser CO₂ ou autre) ou par une technique de moulage par thermo-compression (comme décrit ci-après en référence à la **figure 12****).** On peut ainsi former les premières macro-texturations 10 par reflux thermique au laser ou par ablation laser (ablation au moyens de pulses lasers ultra-courts).

La couche holographique 8, disposée entre la couche texturée 4 et le support 6, comprend un réseau diffractif formant par effet holographique un arrangement 15 de pixels 16 dans une base de couleurs BC d'au moins deux couleurs distinctes **(****figures 1-2****).** A noter que ce réseau diffractif peut lui-même être formé par une pluralité de réseaux diffractifs. Cet arrangement 15 de pixels 16 forme intrinsèquement, avant lamination de la couche texturée 4 avec le support 6, de l'image holographique intrinsèque IG1 **(****figure 1****).** La lamination conduit à la personnalisation de l'arrangement 15 de pixels 16 qui forme alors l'image holographique personnalisée IG1a **(****figure 2****).**

On considère à titre d'exemple que la base de couleur BC est composée de 3 couleurs distinctes CL1, CL2 et CL3 (par exemple une base rouge-vert-bleu), d'autres exemples de bases de couleur BC avec une pluralité de couleurs distinctes étant possibles.

Plus précisément, la couche holographique 8 comprend par exemple une structure holographique métallique configurée pour former par effet holographique un arrangement 15 de pixels de couleur 16 dans la base de couleurs BC. Cette structure holographique produit intrinsèquement l'arrangement 15 de pixels 16 sous la forme d'une image holographique IG1 par diffraction, réfraction et/ou réflexion d'une lumière incidente LG1. La configuration en taille, forme, dimensions, etc. de l'arrangement 15 peut être adaptée au cas par cas par l'homme du métier. En particulier, les formes et dimensions des pixels 16 ainsi que l'arrangement spatial des pixels 16 peuvent varier selon le cas.

Le principe de l'hologramme est bien connu de l'homme du métier. Certains éléments sont rappelés ci-après pour référence. Des exemples de réalisation de structures holographiques sont décrits par exemple dans le document EP 2 567 270 B1. En particulier, la diffraction se produisant dans un hologramme est un phénomène de réflexion avec des interférences, comme bien connu de l'homme du métier. Par définition, la diffraction au niveau d'un réseau diffractif holographique constitue donc un cas particulier du phénomène de réflexion à l'interface entre deux matériaux. Autrement dit, on peut considérer que si la couche optiquement active 8 est holographique, elle est à la fois réfléchissante et diffractive.

On considère dans cet exemple que la couche optique 8 se caractérise par des propriétés optiques (en particulier de diffraction) qui définissent la manière dont une lumière incidente LG1 interagit avec la couche holographique 8 notamment en se diffractant pour produire un effet visuel, comme décrit ci-après.

Selon un exemple particulier, la couche holographique 8 comprend par exemple des reliefs (ou structures en relief) et une sous-couche métallique à haut indice de réfraction qui recouvre ces reliefs et qui présente un indice de réfraction supérieur à l'indice de réfraction des reliefs. Ces reliefs comprennent des portions saillantes (appelés aussi « monts ») séparés par des renfoncements (appelés aussi « vallées »), de sorte à définir une information tridimensionnelle d'une image holographique. La sous-couche métallique à haut indice de réfraction peut comprendre au moins l'un parmi les matériaux suivants : aluminium, argent, cuivre, sulfure de zinc, oxyde de Titane, ou une combinaison d'au moins deux de ces matériaux. Ces reliefs en monts et vallées forment, en combinaison avec la sous-couche métallique, une structure holographique qui produit un hologramme ou effet holographique.

Les reliefs du réseau diffractif de la couche holographique 8 peuvent être formés par exemple par embossage d'une couche de vernis d'estampage de façon connue pour la réalisation de structures diffringentes. La surface estampée des reliefs présente ainsi une forme de réseau diffractif périodique dont la profondeur et la période peuvent être respectivement de l'ordre de la centaine à quelques centaines de nanomètres par l'exemple.

Par ailleurs, le support 6 peut être quelconque. Il peut s'agir d'une couche support par exemple permettant d'assurer une bonne tenue mécanique de l'ensemble.

Comme représenté en **figure 1****,** le réseau diffractif de la couche holographique 8 est configuré intrinsèquement (avant la lamination des éléments constitutifs du dispositif optique 2) pour former un arrangement 15 de pixels 16.

Comme représenté en **figure 2****,** la première surface 4a de la couche texturée 4 est assemblée par lamination avec le support 6 de sorte que la couche holographique 8, disposée entre la couche texturée 4 et le support 6, est déformée par les premières macro-texturations 10 pour présenter (ou comprendre, ou adopter) des deuxièmes macro-texturations 11 conformes (ou complémentaires) aux premières macro-texturations 10. Ainsi, les deuxièmes macro-texturations 11 de la couche holographique 8 sont formées en correspondance avec les premières macro-texturations 10 de la couche texturée 4.

Par lamination, on entend dans ce document un processus mécanique consistant à fixer ensemble au moins deux couches en appliquant sur ces couches une pression mécanique selon une durée appropriée, avec apport ou non de chaleur, de sorte que les couches mises en jeu sont assemblées à des pression et température telles que les matières qui les constituent atteignent leur point de ramollissement de Vicat et s'interpénètrent localement pour donner des ensembles laminés sensiblement cohérents.

Ainsi, la lamination de la première surface 4a de la couche texturée 4 avec le support 6 implique une action de pressage (ou pression), et éventuellement un chauffage (lamination à chaud), ce qui cause un transfert de texturation (ou transfert de relief) depuis la couche texturée 4 vers la couche holographique 8 positionnée en vis-à-vis. Lors de la lamination, la couche holographique 8 se déforme par un transfert des macro-texturations 10 de la couche texturée 4 vers la couche holographique 8. Sous l'effet de cette déformation, les deuxièmes macro-texturations 11 sont générées dans la couche holographique 8 conformément aux premières macro-texturations 10. Ainsi, les deuxièmes macro-texturations 11 selon laquelle est déformée la couche holographique 8 lors de la lamination sont complémentaires, ou substantiellement complémentaires (si l'on tient compte d'éventuelles imperfections du processus de transfert), des premières macro-texturations 10 de la couche texturée 4. Autrement dit, le motif selon lequel sont formées les deuxièmes macro-texturations 11 est complémentaire du motif des premières macro-texturations 10. Les motifs des premières et deuxièmes macro-texturations 10, 11 définissent respectivement l'arrangement spatial de ces macro-texturations.

La déformation par lamination du réseau diffractif de la couche holographique 8 conduit à une personnalisation (ou modification) de l'apparence visuelle de la couche holographique 8, c'est-à-dire de l'arrangement 15 de pixels 16 formant intrinsèquement l'image holographique intrinsèque IG1, de sorte à obtenir une apparence visuelle personnalisée de l'arrangement 15 de pixels 16 qui prend alors la forme d'une image holographique personnalisée IG1a qui est fonction des deuxièmes macro-texturations 11 formées dans la couche holographique 8. Autrement dit, l'image holographique IG1a ainsi obtenue est formée par la couche holographique 8 qui a été déformée par lamination pour adopter les deuxièmes macro-texturations 11.

Dans cet exemple, la couche holographique 8 est laminée directement contre la couche texturée 4, bien que des variantes soient possibles dans lesquelles une ou des couche intermédiaires sont présentes à l'interface entre la couche holographique 8 et la couche texturée 4.

Selon un exemple particulier, la couche holographique 8 est sensiblement plate avant la lamination (elle s'étend dans un plan). De manière générale, on suppose que la couche holographique 8 suit l'orientation du support 6 avant lamination dans la mesure où la couche holographique 8 est disposée dessus. La couche holographique 8 peut par exemple être formée (déposée, imprimée, etc.) sur le support 6 avant de réaliser la lamination avec la couche texturée 4. La texturation du support 6 est ainsi contrainte par l'adhésion de la couche holographique 8 sur le support 6 en fonction du procédé de formation (procédé d'impression par exemple) utilisé.

Selon un exemple particulier, le support 6 comprend une surface (ou face) 6a sur laquelle est formée la couche holographique 8 avant la lamination avec la couche texturée 4, cette surface 6a pouvant être lisse ou présenter une légère rugosité aléatoire afin de faciliter la formation de la couche holographique 8 (manipulation du support et, le cas échéant, adhésion de l'encre). La couche holographique 8 est par exemple déposée et collée par un procédé de plaquage à chaud sur le support 6. La surface 6a du support 8 présente par exemple une rugosité inférieure en moyenne à 5 µm en amplitude avant la lamination avec la couche texturée 4a.

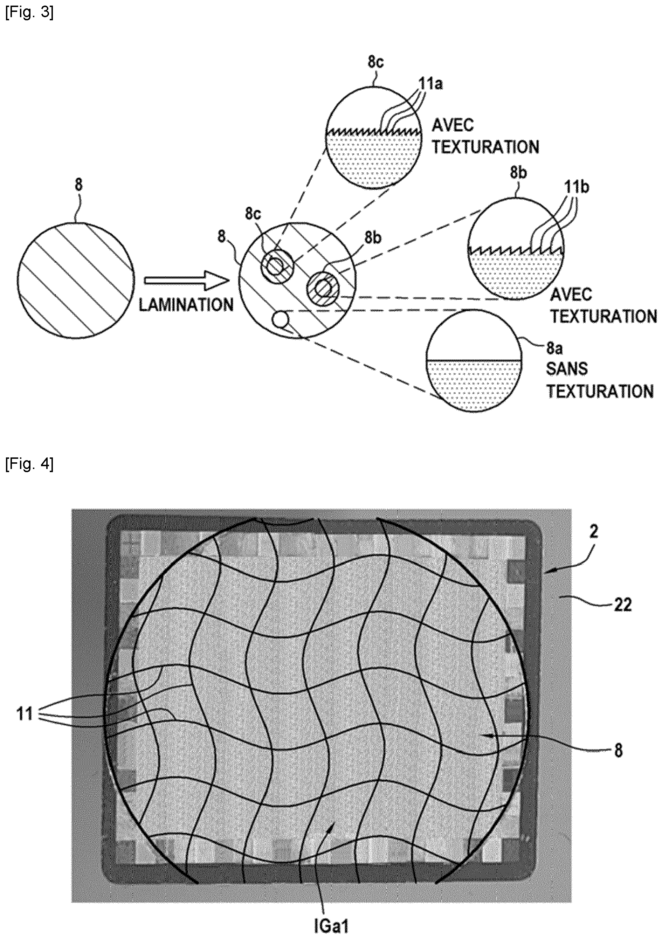

La **figure** 3 représente schématiquement la manière dont le réseau diffractif de la couche holographique 8 peut être modifié par le processus de lamination de la couche texturée 4 avec le support 6. On suppose par exemple que la couche holographique 8 comprend intrinsèquement (avant lamination) une structure diffractive uniforme sans motif particulier. Sous l'effet de la lamination, la couche holographique 8 est déformée de sorte que son réseau diffractif adopte au moins un motif particulier, à savoir celui des deuxièmes macro-texturations 11a ou 11b par exemple dans les zones 8a et 8b respectivement.

Le dispositif optique 2 peut être configuré de sorte que la couche holographique 8 comporte une pluralité de régions texturées, par exemple les régions texturées 8b et 8c **(****figure 3****),** ces régions comprenant des deuxièmes macro-texturations 11 différentes. Le dispositif optique 2 peut également être configuré pour que la couche holographique 8 comporte au moins une région non-texturée 8a **(****figure 3****),** c'est-à-dire une région dépourvue de deuxièmes macro-texturations 11.

Selon un exemple particulier, les premières et deuxièmes macro-texturations 10, 11 présentent une hauteur comprise entre 1 µm et 100 µm.

Le motif des deuxièmes macro-texturations 11 formées lors de la déformation par lamination dans la couche holographique 8 peut être de diverses natures, comprend des reliefs semi-cylindriques ou elliptiques.

D'autres exemples de réalisation sont toutefois possibles. Le motif des deuxièmes macro-texturations 11 peut également comprendre toutes combinaisons des configurations de motif ci-dessus.

Selon l'exemple considéré ici, la couche texturée 4 présente une température de transition vitreuse supérieure ou égale à celle du support 6. De façon bien connue, la température de transition vitreuse est la température à laquelle le matériau considéré devient visqueux. Autrement dit, la couche texturée 4 est plus dure que le support 6, ce qui permet de garantir une bonne adhésion de l'ensemble de la structure lors de la lamination. De manière générale, il est préférable que la couche texturée 4 soit suffisamment dure pour résister le cas échéant à un transfert à chaud (si de la chaleur est appliquée) et permettre le transfert de texturations et une bonne tenue mécanique de l'ensemble de la structure.

Selon un exemple particulier, la couche texturée 4 et le support 6 sont formés d'un même matériau ou d'un même ensemble de matériaux. Ainsi la couche texturée 4 et le support 6 présentent la même capacité d'adhérence et peuvent donc fusionner et bien adhérer l'une avec l'autre lors de la lamination, ce qui permet de garantir de bonnes propriétés mécaniques de la structure. Il est ainsi plus difficile de séparer par la suite les éléments constitutifs du dispositif optique 2, ce qui rend ce dernier plus robuste aux falsifications.

La couche texturée 4 et le support 6 peuvent par exemple être tous deux formés d'un matériau, ou ensemble de matériaux, à base de polymère. Ils peuvent par exemple être en matériau plastique (polycarbonate, polyéthylène, etc.).

Selon un exemple particulier, lors de la lamination, la couche texturée 4 peut fusionner avec le support 6 dans une ou des régions où la couche holographique 8 n'est pas présente à l'interface entre la couche texturée 4 et le support 6. Pour ce faire, des ouvertures peuvent être aménagées dans la couche holographique 8 ou, plus généralement, au moins une région de contact est ménagée de sorte que la couche texturée 4 soit en contact direct avec le support 6 (de sorte qu'il n'y ait pas la couche optiquement active 8 à l'interface dans cette région). Le phénomène de fusion de la couche texturée 4 avec le support 6 entraîne alors la création de ponts d'adhésion fixant la couche texturée 4 au support 6 de sort à piéger la couche holographique 8 au sein de la structure, ce qui permet d'améliorer encore d'avantage les bonne propriétés mécaniques de l'ensemble.

Plus particulièrement, les déformations générées par la lamination peuvent causer des modifications des propriétés optiques (de diffraction ou de réflexion) de la couche holographique 8. Ainsi, après la lamination, la couche holographique 8 se caractérise par des propriétés optiques de réflexion ou de diffraction qui sont fonction des deuxièmes macro-texturations 11 causées par les premières macro-texturations 10. Ces modifications des propriétés optiques engendrent à leur tour des effets visuels personnalisés IG1a, difficiles à reproduire, et authentifiable selon une quelconque technique d'inspection optique appropriée. La complexité des effets visuels IG1a peut être contrôlée en adaptant le motif des premières macro-texturations 10, et donc le motif des deuxièmes macro-texturations 11 qui sont arrangées spatialement conformément (ou de façon complémentaire) aux premières macro-texturations 10. Les effets visuels IG1 produits par le dispositif optique 10 peuvent notamment être uniforme ou non uniforme, ou respecter un motif particulier imposé par l'arrangement spatial des deuxièmes macro-texturations 11.

Selon un exemple particulier, la formation des deuxièmes macro-texturations 11 dans la couche optiquement active 8 conduit à un changement des propriété optiques de diffraction de la couche optique active 8 après lamination par rapport à la couche optiquement active 8 intrinsèque (avant lamination). Ce changement peut se traduire par un changement d'intensité d'une lumière incidente LG1 diffractée par la couche optiquement active 8 en fonction d'un angle d'incidence de la lumière incidente LG1 vis-à-vis de la dite couche holographique 8, ou encore par un changement de couleur (ou teinte) en fonction de l'angle d'incidence de la lumière incidente LG1.

Selon un exemple particulier, le support 6 est composé d'un matériau (ou d'un ensemble de matériaux) au moins partiellement transparent à la lumière dans le spectre de longueurs d'onde du visible, ce qui permet l'exposition (ou illumination) de la couche holographique 8 à la lumière incidente LG1 depuis la face supérieure du dispositif optique 2 ainsi que l'observation (vue de dessus comme illustré en **figure** 2) de l'effet visuel personnalisé IG1a produit en réponse par la couche holographique 8. Dans ce cas particulier, la couche texturée 4 peut être opaque ou transparente selon le cas. Dans le cas où le couche texturée 4 est également transparente au moins partiellement à la lumière dans le spectre de longueurs d'onde du visible, un observateur peut alors visualiser l'effet visuel personnalisé IG1a produit par la couche holographique 8 depuis les deux faces (supérieure et inférieure) du dispositif optique 2.

Selon des variantes de réalisation, la couche texturée 4 est composée d'un matériau (ou d'un ensemble de matériaux) transparent au moins partiellement à la lumière dans le spectre de longueurs d'onde du visible, ce qui permet l'exposition de la couche holographique 8 à la lumière incidente depuis la face inférieure du dispositif optique 2 ainsi que l'observation (vue de dessous) de l'effet visuel personnalisé IG1a produit en réponse par la couche holographique 8. Dans ce cas particulier, le support 6 peut être opaque ou transparent selon le cas. Comme indiqué ci-dessus, lorsque le support 6 et la couche texturée 4 sont transparents, il est possible d'illuminer et de visualiser la couche holographique 8 par les deux faces du dispositif optique 2.

La capacité à illuminer et visualiser la couche holographique 8, et donc le rendu visuel du dispositif optique 8 sous lumière incidente, sont alors fonction du degré de transparence du support 6 et/ou de la couche texturée 4.

Le rendu visuel personnalisé IG1a ainsi obtenu forme alors une image holographique lorsque le dispositif optique 2 est exposé à une lumière incidente (dans le spectre de longueurs d'onde du visible par exemple). Une inspection optique peut être réalisée par un observateur OB (à l'œil nu ou au moyen d'un appareil de visualisation) ou au moyen d'un appareil d'inspection optique configurée pour inspecter (automatiquement ou non) l'effet visuel personnalisé IG1a produit par le dispositif optique 2 sous illumination d'une lumière incidente.

La **figure 4** représente un exemple d'une image holographique personnalisée IG1a produite par un dispositif optique 2 sous illumination d'une lumière incidente, par exemple dans le spectre de longueurs d'onde du visible, comme précédemment décrit. Plus précisément, cette image personnalisée IG1a émane de la couche holographique 8 qui est configurée pour former l'arrangement 15 de pixels 16 et qui présente des deuxièmes macro-texturations 11 pour personnaliser cet arrangement 15. Dans cet exemple, les deuxièmes macro-texturations 11 forment ainsi dans l'image finale IG1a un motif d'une forme géométrique prédéterminée (un quadrillage de lignes curvilignes dans cet exemple).

Le réseau diffractif peut s'étendre intrinsèquement (avant lamination) dans un seul plan (pour former par exemple une couche mince 2 dimensions). La formation des deuxièmes macro-texturations 11 confère alors une orientation particulière en 3 dimensions (non plane) au réseau diffractif. Autrement dit, la lamination a pour effet que le réseau diffractif ne s'étend plus dans un seul plan mais présente des orientations en 3 dimensions (par exemple avec des parties saillantes, des vallées, des renfoncements, etc.). Ainsi, grâce aux deuxièmes macro-texturations 11, on peut répartir l'orientation de la diffraction de façon personnalisée, par exemple autour de l'axe perpendiculaire à l'axe du réseau de diffraction.

La lamination réalisée permet toutefois de conserver totalement ou substantiellement la structure intrinsèque du réseau diffractif. En effet, l'orientation spatiale de la couche holographique 8 (qui contient le réseau diffractif) est modifiée ou personnalisée tandis que la structure intrinsèque du réseau diffractif est préservée. Ainsi, le réseau diffractif peut conserver en particulier la même période, mais avec une orientation différente dans l'espace.

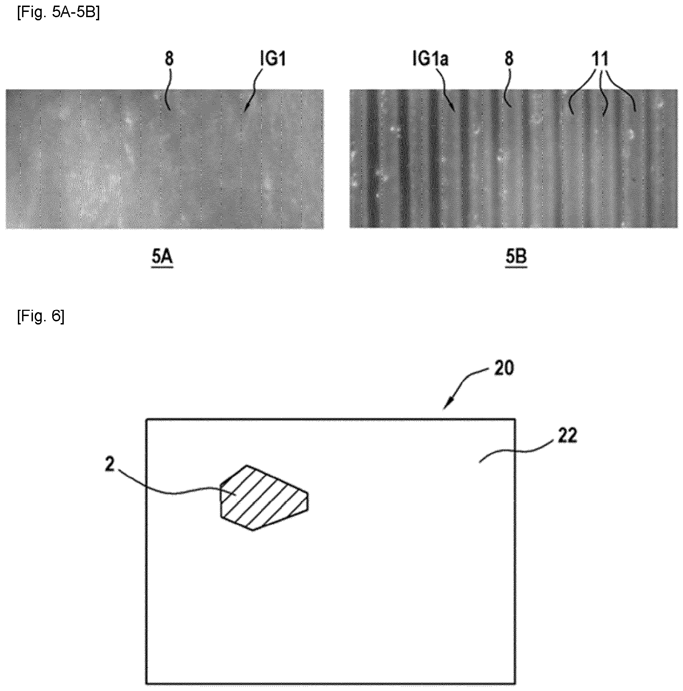

Les **figures 5A** et **5B** sont des vues de dessus d'une région de la couche holographique 8 respectivement avant lamination **(****figure 5A****),** et après lamination **(****figure 5B****)** de la couche texturée 4 avec le support, comme précédemment décrit. Comme illustré en **figure 5B****,** des deuxièmes macro-texturations 11 de forme semi-sphérique ou elliptique sont formées dans la couche holographique 8 ce qui cause l'introduction d'un motif en bandes dans l'image holographique finale IG1a.

Selon un mode de réalisation particulier, le dispositif optique 2 tel que précédemment décrit **(****figures 1-4****)** est apte à être intégré (ou positionné) dans ou sur un document pour servir de dispositif de sécurité. Un tel document comprenant le dispositif optique 2 constitue ainsi un document sécurisé dans la mesure où le dispositif optique 2 peut être authentifié à partir d'une analyse visuelle ou optique de l'image holographique personnalisée IG1a produite par la couche holographique 8 sous illumination d'une lumière incidente

La **figure 6** représente schématiquement un document sécurisé 20 comprenant un corps de document 22 dans lequel est incorporé le dispositif optique 2 servant de dispositif de sécurité selon un mode de réalisation particulier. Dans cet exemple, le document sécurisé 20 est par exemple une carte (carte à puce, badge, ou autre). Les forme et configuration du dispositif optique 2 ainsi que du document 20 lui-même peuvent être adaptés par l'homme du métier selon le cas d'usage.

Le dispositif optique de l'invention permet de former une image holographique personnalisée de haute qualité et sécurisée, et ce à partir d'une couche holographique qui est configurée pour former un arrangement de pixels et qui est en outre déformée par lamination avec une couche texturée de sorte à personnaliser l'apparence visuelle de l'arrangement de pixels.

De manière standard, le réseau diffractif de la couche holographique peut s'étendre intrinsèquement (avant lamination) dans un seul plan (sous la forme par exemple une couche mince 2D). L'ajout de la macro-texturation selon l'invention confère alors au réseau diffractif une orientation suivant une troisième dimension (non plane). Grâce à cette macro-texturation, on peut donc répartir l'orientation de la diffraction autour de l'axe perpendiculaire au réseau de diffraction, et ainsi créer divers motifs dans l'arrangement de pixels pour obtenir une image holographique personnalisée.

Le dispositif optique de l'invention est difficile à reproduire ou falsifier et peut être authentifié de façon fiable et sécurisée. L'authentification du dispositif optique peut être réalisée en analysant le motif des macro-texturations formées dans la couche holographique et en vérifiant la position ou l'alignement de ce motif par rapport à l'arrangement de pixels.

Aussi, l'invention trouve une application particulière notamment dans les dispositifs de sécurité aptes à être associés à un document ou tout autre objet en vue de le sécuriser (par exemple des documents identitaires, documents officiels ou autres). L'invention permet en particulier de former des dispositifs de sécurité personnalisés à bas coût et permettant de sécuriser efficacement un document ou autre.

Dans les exemples précédemment décrits, la couche holographique 8 est intégrée au sein de la structure du dispositif optique 2, entre la couche texturée 4 et le support 6 qui sont laminés ensemble et qui sont préférentiellement fusionnés ensemble, ce qui rend difficile l'accès de la couche holographique 8 par un faussaire sans endommager ou détruire le dispositif optique 2.

La formation des deuxièmes macro-texturations 11 par lamination dans la couche optique 8 permet également d'obtenir une plage importante d'angles d'observation dans laquelle un observateur OB peut visualiser l'image holographique personnalisée IG1a produite par le dispositif optique 2, comme décrit plus en détail ci-après dans des exemples particuliers.

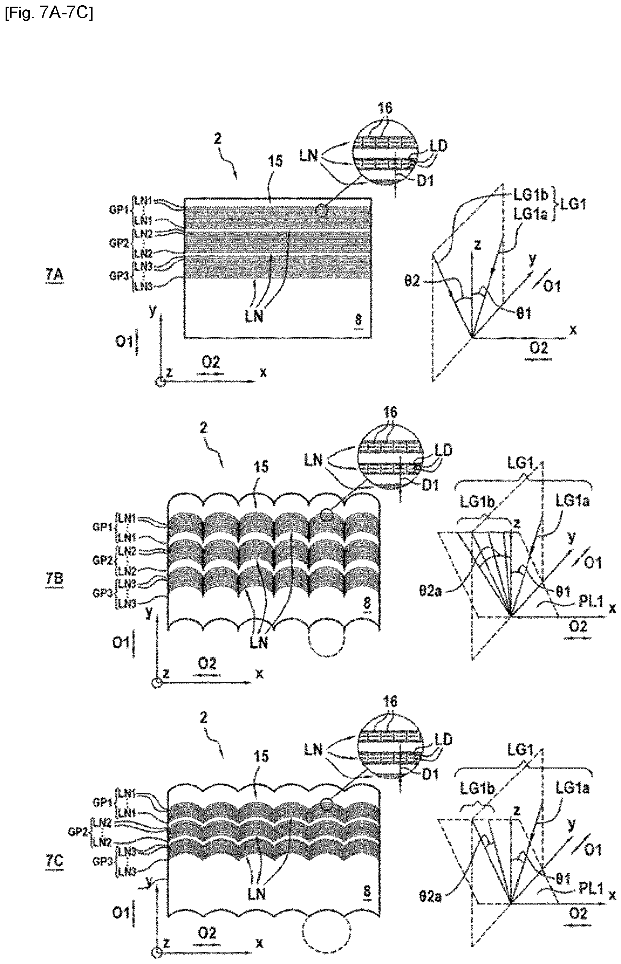

Des modes de réalisation particuliers du dispositif optique 8 sont à présent décrits en référence aux figures 7A-7C, 8 et 9. La figure 7A représente la couche holographique 8 avant la lamination de la couche texturée 4 avec le support 6, tandis que les figures 7B et 7C représentent la couche holographique 8 dans laquelle sont formées par lamination des deuxièmes macro-texturations 11 selon des modes de réalisation de l'invention.

Plus précisément, on considère dans ces exemples particuliers que les deuxièmes macro-texturations 11 formées par lamination dans la couche holographique 8 sont de forme semi-cylindrique **(****figure 7B****)** ou elliptique **(****figure 7C****)** et s'étendent selon une première orientation (ou première direction) notée O1 dans le plan (xy) de la couche holographique 8. Les deuxièmes macro-texturations 11 semi-cylindriques ou elliptiques permettent d'orienter la lumière incidente LG1 diffractée par les réseaux de diffraction de façon homogène dans l'espace, améliorant ainsi la qualité de l'image holographique visualisable par un observateur à partir des pixels 16 de couleurs.

Comme déjà indiqué, la couche holographique 8 est en outre configurée pour former sous la forme d'hologramme un arrangement 15 de pixels 16. Dans ces exemples, les pixels 16 sont chacun formés par une portion (ou section) correspondante du réseau diffractif de la couche holographique 8. Ces portions correspondantes du réseau diffractif, et plus généralement le réseau diffractif lui-même, sont structurés en (comprennent des) lignes diffractives LD s'étendant selon une deuxième orientation (ou première direction) O2 perpendiculaire à la première orientation O1 dans le plan de la couche holographique. On entend ici par lignes diffractives des lignes de diffraction selon lesquelles est structuré le réseau diffractif de la couche holographique 8. Dans les exemples considérés ici, les lignes diffractives LN sont rectilignes, bien que des variantes soient possibles avec des lignes de diffraction curvilignes.

Comme déjà indiqué, la manière dont les pixels 16 sont arrangés peut varier selon le cas. Selon des modes de réalisation particuliers, les pixels 16 du réseau diffractif de la couche holographique 8 sont au moins en partie arrangés de sorte à former des lignes de pixels notées LN, chacune de ces lignes étant dans une couleur unique CL1-CL3 parmi la base de couleurs BC. Comme illustré en **figures 7A-7C****,** ces lignes LN de pixels sont parallèles et orientées selon l'orientation O2. Ainsi, ces lignes LN de pixels s'étendent perpendiculairement (ou substantiellement perpendiculairement) à l'orientation O1 des deuxièmes macro-texturations 11 de forme semi-cylindrique ou elliptique (figures 7B-7C). Autrement dit, les lignes LN de pixels et les sections du réseau de diffraction (c'est-à-dire les lignes diffractives LD) constitutives de ces lignes LN de pixels sont perpendiculaires aux deuxièmes macro-texturations 11 semi-cylindriques ou elliptiques.

Comme illustré en **figure 7A****,** la couche holographique 8 avant lamination est dépourvue de macro-texturation. Sous illumination d'une lumière incidente LG1, la couche holographique 8 forme donc par effet holographique les lignes LN de pixels de couleur qui ne sont pas personnalisées par le biais de macro-texturations. Dans cet exemple, les lignes LN de pixels non personnalisées s'étendent ainsi dans 2 dimensions, à savoir dans le (ou substantiellement dans le) plan de la couche holographique 8. Un rayon incident LG1a est ainsi diffracté par le réseau diffractif de la couche holographique 8 de sorte à former un rayon diffracté LG1b. La plage d'angles d'illumination θ1, par rapport à la normale au plan de la couche holographique 8, dans laquelle la couche holographique 8 doit être illuminée par la lumière incidente LG1 pour former une image holographique est par nature restreinte. En outre, la plage d'angles d'observation θ2, par rapport à la normale au plan de la couche holographique 8, dans laquelle est visualisable l'image holographique pour un observateur est également par nature restreinte.

Comme illustré en **figures 7B-7C****,** la formation par lamination des deuxièmes macro-texturations 11 dans la couche holographique 8 permet d'agrandir la plage d'angle d'illumination θ1, par rapport à la normale au plan de la couche holographique 8, dans laquelle la couche holographique 8 doit être illuminée par la lumière incidente LG1 pour former une image holographique, à savoir l'image personnalisée IG1a. De même, cela permet d'agrandir la plage d'angles d'observation θ2, par rapport à la normale au plan de la couche holographique 8, dans laquelle est visualisable l'image holographique personnalisée IG1a.

De plus, la configuration perpendiculaire des lignes LN de pixels (et donc des lignes diffractives LD) par rapport aux deuxièmes macro-texturations 11 permet d'obtenir une bonne qualité d'image holographique dans la mesure où cela permet de garantir une diffraction homogène de la lumière incidente LG1 sur les lignes LN de pixels et permet d'éviter que le phénomène de diffraction ne soit supprimé ou limité dans certains cas. En effet, les déformations générées par la texturation peuvent ainsi être les mêmes (ou substantiellement les mêmes) sur chaque ligne LN de pixel. Si, a contrario, les deuxièmes macro-texturations 11 étaient parallèles aux lignes LN de pixels, certaines lignes de couleur pourraient être toujours sur une crête des deuxièmes macro-texturations 11 et d'autres toujours dans un renfoncement. L'orientation de la diffraction serait alors différente d'une ligne LN pixel à l'autre, ce qui dégraderait la qualité de l'image holographique finale.

Selon un mode de réalisation particulier, les lignes LN de pixels sont arrangées de façon périodique dans le plan de la couche holographique 8. Cet arrangement permet d'obtenir un effet visuel homogène par diffraction d'une lumière incidente par le réseau diffractif de la couche holographique 8.

Selon un mode de réalisation particulier, les lignes LN de pixels sont arrangées par groupe GP de lignes LN de pixels dans chaque couleur parmi la base de couleurs BC, chaque groupe GP comprenant une (ou étant formé d'une) pluralité de lignes LN de pixels dans une même couleur parmi les couleurs CL1-CL3 de la base de couleurs BC. Les lignes LN de pixels sont en outre arrangées périodiquement dans chaque groupe GP. Il est ainsi possible d'arranger spatialement les groupes GP selon une alternance périodique dans les différentes couleurs de la base BC de couleurs utilisée. Cet arrangement particulier permet d'obtenir une bonne qualité d'image.

Selon un mode de réalisation particulier, les lignes de pixels sont arrangées spatialement dans chaque groupe GP selon un pas D1 séparant chaque paire de lignes LN de pixels adjacentes, tel que P ≤ 100 µm **(****figures 7A-7C****).** Autrement dit, les lignes LN de pixels sont arrangées spatialement dans chaque groupe GP de sorte à ce que chaque paire de deux lignes LN de pixels adjacentes sont espacées l'une de l'autre d'un pas P, où P ≤ 100 µm. La distance D1 séparant les lignes LN de pixels voisines est ainsi inférieure au pouvoir séparateur de l'œil humain, ce qui permet d'obtenir une bonne qualité d'image holographique dans la mesure où un observateur n'est pas capable de distinguer ou différencier individuellement les lignes LN de pixels les unes des autres.

Selon des modes de réalisation particuliers, les pixels 16 de l'arrangement 15 formé par la couche holographique 8 comportent chacun une pluralité de sous-pixels de couleurs distinctes (ou couleurs respectives) dans la base BC de couleurs (CL1-CL3 dans cet exemple).

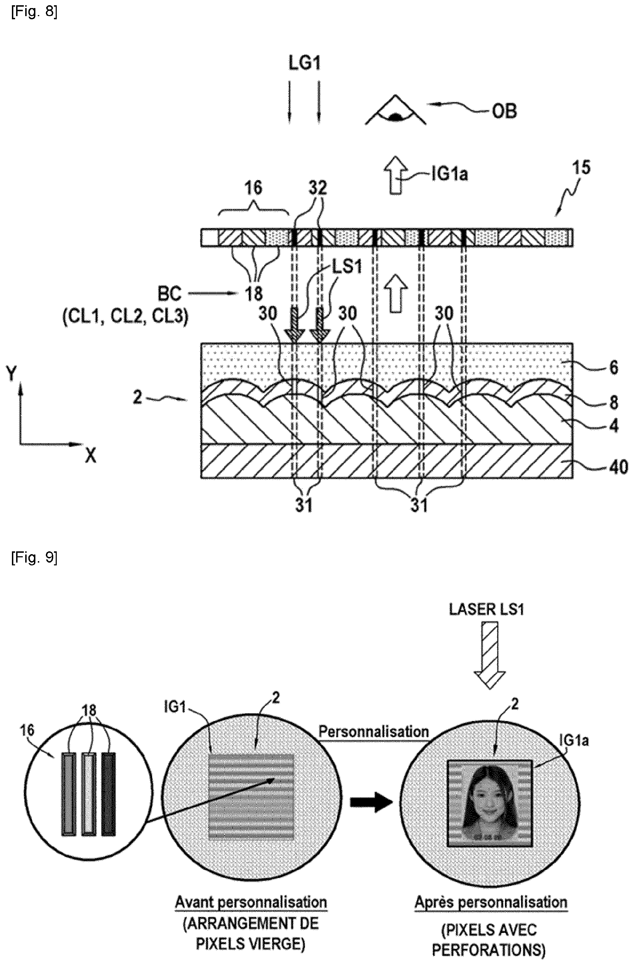

Les **figures 8-9** représentent ainsi un mode de réalisation particulier dans lequel les pixels 16 de l'arrangement 15 comportent chacun une pluralité de sous-pixels 18 de couleur distincte dans la base BC d'au moins deux couleurs distinctes (à savoir CL1-CL3 dans cet exemple). Pour ce faire, chaque sous-pixel 18 est formé par une portion (ou section) respective de réseau diffractif, de la couche holographique 8, configurée pour générer par diffraction une couleur correspondante dudit sous-pixel.

La configuration des pixels et sous-pixels en nombre, formes, disposition, etc. peut varier selon le cas. Selon un exemple particulier, chaque pixel 16 de l'arrangement 15 de pixels forme un motif identique de sous-pixels de couleur dans la base BC de couleurs (par exemple un motif rouge-vert-bleu selon un arrangement spatial prédéterminé). Cet arrangement 15 de pixels 16 est en outre personnalisé au moyen de perforations comme décrit ci-après.

Toujours dans l'exemple illustré en **figures 8-9****,** le dispositif optique 2 comprend en outre une couche de personnalisation 40 positionnée en regard de la couche holographique 8.

Dans l'exemple considéré ici, la couche de personnalisation 40 est une couche supplémentaire positionnée sous la couche texturée 4, de sorte que la couche texturée 4 est intercalée entre la couche holographique 8 et la couche de personnalisation 40. Des variantes d'arrangement sont toutefois possibles. selon une variante, la couche de personnalisation et la couche texturée 4 peuvent par exemple former une seule et même couche, de sorte qu'aucune autre couche supplémentaire n'est requise à cet effet.

Comme illustré en **figure 8****,** la couche holographique 8 comprend des perforations (ou micro-perforations) 30 formées par un rayonnement laser LS1. Ces perforations 30 révèlent localement au travers de la couche holographique 8 des zones de nuance colorimétrique 32, dans les sous-pixels 18, causées par des régions sous-jacentes 31 de la couche de personnalisation 40. Ces régions sous-jacentes 31, situées en regard des perforations 30, personnalisent l'arrangement 15 de pixel et permettent ainsi de former l'image holographique personnalisée (ou image finale) IG1a à partir de l'arrangement 15 de pixels combiné aux zones de nuance colorimétrique 32.

Les perforations 30 constituent des régions dans lesquelles la couche holographique 8 est détruite (ou supprimée) localement par l'effet de perforation du laser. En plus de détruire localement la structure diffractive de la couche holographique 8, ces perforations 30 révèlent localement au travers de la structure holographique des zones de nuance colorimétrique 32 causées par les régions sous-jacentes 31 positionnées en correspondance dans la couche de personnalisation 40. Pour ce faire, on considère dans cet exemple que la couche texturée 4 et le support 6 sont transparents 4 vis-à-vis au moins du spectre de longueurs d'onde du visible de sorte à ce qu'un utilisateur puisse visualiser, sous la forme des zones de nuance colorimétrique 32, les régions sous-jacentes 31 de la couche de personnalisation 40.

Les perforations 40 sont des perforations traversantes qui s'étendent au travers de l'épaisseur de la couche holographique 8 de sorte à révéler les régions sous-jacentes 31 de la couche de personnalisation 34 au niveau de l'arrangement 15 de pixels 16. Autrement dit, en réalisant ces perforations 40 au laser dans l'épaisseur de la couche holographique 8, on peut découvrir des régions sous-jacentes 31 de la couche de personnalisation 40 de sorte à produire les zones de nuance colorimétrique 32 dans tout ou parties de sous-pixels 18.

Les zones de nuance colorimétrique 32 sont des zones de nuance de couleur (ou de niveau de gris) par rapport aux couleurs respectives des sous-pixels 18. La nature et l'aspect de ces zones de nuance colorimétrique 32 peuvent varier selon la configuration de la couche de personnalisation 40 utilisée. Comme décrit ci-après, la couche de personnalisation 40 peut être opaque, ou transparente, ou encore être sensible aux ultraviolets, ce qui impacte différemment l'influence colorimétrique des zones de nuance colorimétrique 32 dans l'image finale IG1b.

Ainsi, dans l'exemple représenté en **figures 8-9****,** on considère que la couche de personnalisation 40 est opaque vis-à-vis au moins du spectre de longueurs d'onde du visible. Ainsi, les zones de nuance colorimétrique 32 causées par les régions sous-jacentes 31 de la couche de personnalisation 40 sont des zones sombres (ou opaques) formées dans les sous-pixels 18. Sous illumination d'une lumière incidente LG1 dans le spectre de longueurs d'onde du visible, une image holographique personnalisée IG1a est ainsi formée par l'arrangement 15 de pixels combiné aux zones sombres 32.

Selon un exemple particulier, la couche de personnalisation 40 comporte une encre sensible aux ultraviolets, de sorte que l'image holographique personnalisée IG1a est visible lorsque le dispositif optique 2 (et plus particulièrement la couche holographique 8) est exposé à des ultraviolets. Sous illumination d'une lumière incidente LG1 dans les ultraviolets, l'encre produit de la lumière dans le spectre de longueurs d'onde du visible, causant ainsi la formation dans les sous-pixels 18 de nuances colorimétriques 32.

Selon un exemple particulier, la couche de personnalisation 40 est transparente vis-à-vis au moins du spectre de longueurs d'onde du visible. Ainsi, les zones de nuance colorimétrique 32 causées par les régions sous-jacentes 31 de la couche de personnalisation 40 sont des zones claires (ou brillantes) dans les sous-pixels 18 lorsqu'une lumière incidente LG1 dans le spectre de longueurs d'onde du visible est projetée au travers des perforations 32.

Pour ce faire, les perforations 40 peuvent présenter diverses formes et dimensions qui peuvent varier selon le cas. Plus particulièrement, les perforations 40 sont agencés de façon à sélectionner la couleur des pixels 16 en modifiant la contribution colorimétrique des sous-pixels 18 les uns par rapport aux autres dans une partie au moins des pixels 16 formés par la couche holographique 8, de sorte à révéler l'image personnalisée IG1a à partir de l'arrangement 15 de pixels combiné zones de nuance colorimétrique 32.

En détruisant localement par perforation tout ou partie de sous-pixels 31 et en révélant, à la place, des parties sous-jacentes 31 de la couche de personnalisation 40, on génère ainsi des nuances de couleurs (ou niveaux de gris) dans les pixels 16 en modifiant la contribution colorimétrique de certains sous-pixels 18, les uns par rapport aux autres, dans le rendu visuel de l'image finale IG1a. Les zones de nuance colorimétrique 32 permettent en particulier de moduler le passage de la lumière de sorte que, pour une partie au moins des pixels 16, un sous-pixel 18 ou plus a une contribution (ou un poids) colorimétrique augmentée ou diminuée par rapport à celle d'au moins un autre sous-pixel 18 voisin du pixel concerné. L'effet holographique peut ainsi être est éliminé, ou réduit, dans les régions perforées de la couche holographique 8, ce qui diminue (voire élimine totalement) la contribution relative en couleur des sous-pixels 18 qui sont perforés au moins en partie par rapport à au moins un autre sous-pixel 18 voisin des pixels 16 concernés.

On considère ici que l'image personnalisée IG1a ainsi créée est une image couleur résultant d'une modulation sélective des contributions colorimétriques de sous-pixels 18 de couleur. A noter toutefois que l'on peut réaliser de la même manière une image personnalisée IG1a en niveaux de gris en adaptant les couleurs des sous-pixels 18 en conséquence.

Le rayonnement laser LS1 utilisé pour former les perforations 30 dans la couche holographique 8 est de préférence dans un spectre de longueurs d'onde différent du spectre de longueurs d'onde du visible. Pour ce faire, on peut par exemple utiliser un laser YAG (par exemple à une longueur d'onde de 1064 nm), un laser bleu, un laser UV, etc. On peut par ailleurs appliquer par exemple une fréquence d'impulsion comprise entre 1 kHz et 100 kHz, bien que d'autres configurations soient envisageables. Il revient à l'homme du métier de choisir la configuration du rayonnement laser LS1 selon le cas d'espèce.

Selon un exemple particulier, le rayonnement laser LS1 est caractérisé par un spectre de longueurs d'onde qui est absorbé au moins partiellement par la couche holographique 8. Pour cela, on choisit donc les matériaux de la couche holographique 8 en conséquence.

Selon un exemple particulier, les matériaux formant la couche holographique 8 sont sélectionnés de sorte à ce qu'ils n'absorbent pas la lumière dans le visible. De cette manière, il est possible de créer des perforations 30 au moyen d'un rayonnement laser LS1 émettant hors du spectre visible et de générer une image personnalisée IG1a qui est visible à l'œil humain par effet holographique. Pour ce faire, la couche holographique 8 peut être par exemple en polycarbonate transparent, PVC, colle transparente, etc.

Selon un exemple particulier, les perforations 30 sont formées en projetant le rayonnement laser LS1 sur la couche holographique 8 à une puissance inférieure ou égale à une valeur seuil au-delà de laquelle un effet de « blistering » (perte d'adhérence entre les couches) est susceptible de se produire, ce qui permet de s'assurer que l'on ne génère pas de bulles d'air susceptibles d'endommager la structure. Cette valeur seuil de puissance laser est cependant variable et dépend de chaque cas d'usage (dépend notamment des types d'hologramme et des caractéristiques du laser utilisé). Cette valeur seuil peut être déterminée par l'homme du métier, notamment par un plan d'expérience approprié qui permet de déterminer la puissance laser au-delà de laquelle le laser engendre une destruction de la structure (apparition de bulles).

L'ajout des perforations 30 permet ainsi de créer des nuances de couleurs de façon à former une image couleur IG1a sécurisée et de bonne qualité, grâce à l'interaction entre les zones de nuance colorimétrique 32 et l'arrangement 15 de pixels formé par la couche holographique 8. Selon un exemple particulier, sans la formation de ces zones de nuance colorimétrique 32 par perforation comme décrit ci-avant pour orienter ou sélectionner judicieusement le passage de la lumière incidente LG1, les pixels 16 ne forment qu'un arrangement vierge de pixels dans la mesure où cet ensemble est dépourvu de l'information caractérisant l'image couleur désirée. Ce sont les perforations 40 qui sont configurées, en fonction de l'arrangement de sous-pixels 18 choisi, pour personnaliser l'apparence visuelle des pixels 16 et ainsi révéler l'image couleur finale IG1a.

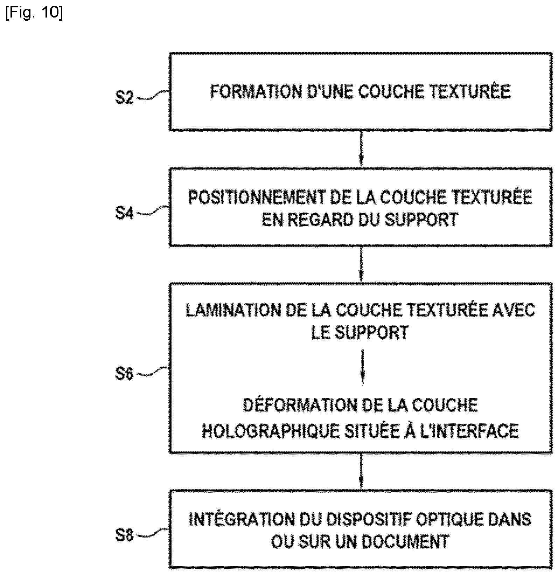

Un procédé de fabrication d'un dispositif optique 2 **(****figures 1-9****)** tel que précédemment présenté est décrit ci-après en référence aux **figures 10-12****,** selon des modes réalisation particuliers. De manière générale, les différents modes de réalisation et détails d'implémentation décrits ci-avant concernant le dispositif optique 2 en référence aux **figures 1-9** peuvent s'appliquer de façon analogue au procédé de fabrication dudit dispositif optique 2.

Au cours d'une étape S2 de formation **(****figures** 1 et **12****),** une couche texturée 4 telle que précédemment décrite est formée, cette couche comprenant en particulier une première surface 4a présentant des premières macro-texturations 10. Divers états de surface et types de premières macro-texturations 10 sont possibles au niveau de la surface 4a de la couche texturée 4.

Les premières macro-texturations 10 de la couche texturée sont par exemple formées au laser ou par une technique de moulage par thermo-compression.

Au cours d'une étape S4 de positionnement **(****figures 1** et **10****),** la première surface 4a de la couche texturée 4 est positionnée en vis-à-vis d'un support 6 comprenant en surface (sur sa face inférieure 6a dans cette exemple) une couche holographique 8 intercalée entre la couche texturée 4 et le support 6. La couche holographique 8 est par exemple formée par exemple par impression ou dépôt sur la surface 6a du support 6 avant l'étape S6 de lamination à venir.

Au cours d'une étape S6 de lamination **(****figures 2** et **10****),** la première surface 4a de la couche texturée 4 est laminée sur le support 6, causant ainsi une déformation par les premières macro-texturations 10 de la couche holographique 8 disposée entre la couche texturée 4 et le support 6, de sorte que la couche holographique 8 comprend des deuxièmes macro-texturations 11 conformes aux premières macro-texturations 10, comme déjà décrit. Les deuxièmes macro-texturations 11 ainsi formées sont donc complémentaires avec les premières macro-texturations 10 de la couche texturée 4.

Au cours d'une étape S8 d'intégration **(****figures 2****,** **6** et **10****),** le dispositif optique 2 résultant des étapes S2-S6 peut éventuellement être intégré ou incorporé dans ou sur un document 20, et plus particulièrement dans ou sur le corps 22 dudit document, de sorte que le dispositif optique 2 serve de dispositif de sécurité permettant d'authentifier le document considéré (dit alors « document sécurisé ») à partir de l'image holographique personnalisée IG1a ainsi formée.

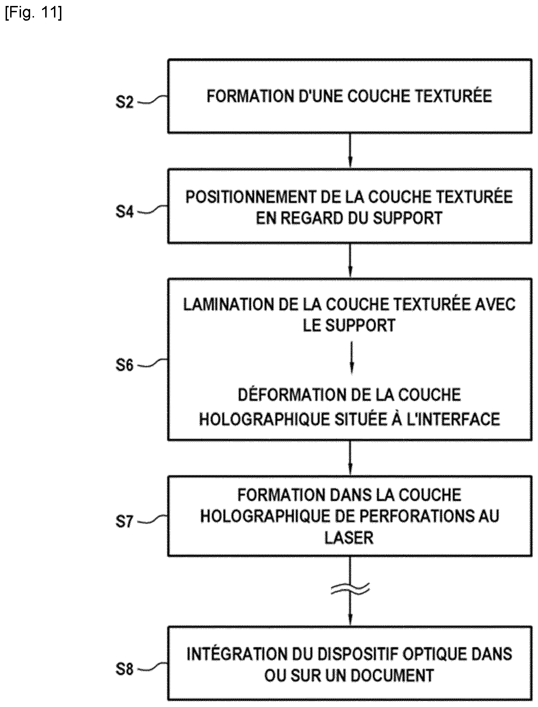

Selon un mode de réalisation particulier représenté en **figure 11****,** une étape S7 de formation est en outre réalisée après l'étape S6 de lamination, et avant l'éventuelle étape S8 d'intégration. Plus particulièrement, un rayonnement laser LS1 est projeté (S7) sur le dispositif optique 2 comme déjà décrit afin de former des perforations 30 **(****figures 8-9****)** dans la couche holographique 8 de sorte à former des zones de nuance colorimétrique 32 dans les sous-pixels 18. Ces zones de nuance colorimétrique 32 (sombres, opaques ou transparentes) sont causées par des régions sous-jacentes 31, de la couche de personnalisation 40, situées en regard des perforations 30, de sorte à former une image holographique personnalisée IG1a à partir de l'arrangement 15 de pixels combiné aux zones de nuance colorimétrique 32.

Par ailleurs, diverses techniques de fabrication sont possibles dans le procédé de fabrication des **figures 10** et **11** pour former les deuxièmes macro-texturations 11 en surface de la couche holographique 8. Comme illustrée en **figure 12****,** on peut par exemple utiliser un système de rouleaux 62 comprenant au moins un rouleau texturé 64 configuré pour appliquer par lamination une couche texturée 4 sur une face libre de la couche holographique 8 de sorte à former l'ensemble laminé précédent décrit.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

## Revendications

1. Dispositif optique (2) comprenant :
- une couche texturée (4) comprenant une première surface (4a) présentant des premières macro-texturations (10); et
- un support (6) comprenant en surface une couche holographique (8) intercalée entre la couche texturée et le support, la couche holographique comprenant un réseau diffractif formant par effet holographique un arrangement (15) de pixels (16) dans une base (BC) d'au moins deux couleurs distinctes,
la première surface de la couche texturée étant assemblée par lamination avec le support de sorte que la couche holographique, disposée entre la couche texturée et le support, est déformée par les premières macro-texturations (10) pour comprendre des deuxièmes macro-texturations (11) conformes auxdites premières macro-texturations, l'apparence visuelle de l'arrangement (15) de pixels (16) étant personnalisée par les deuxièmes macro-texturations (11),
dans lequel les deuxièmes macro-texturations (11) de la couche holographique (8) sont de forme semi-cylindrique ou elliptique et s'étendent selon une première orientation (O1) dans le plan de la couche holographique,
chaque pixel (16) étant formé par une portion correspondante du réseau diffractif, ladite portion correspondante étant structurée en lignes diffractives (LD) s'étendant selon une deuxième orientation (O2) perpendiculaire à la première orientation (O1) dans le plan de la couche holographique.

2. Dispositif selon la revendication 1, dans lequel les premières et deuxièmes macro-texturations (10, 11) présentent une hauteur comprise entre 1 µm et 100 µm.

3. Dispositif selon la revendication 1, dans lequel les pixels (16) du réseau diffractif sont au moins en partie arrangés de sorte à former des lignes (LN) de pixels chacune dans une couleur unique parmi la base d'au moins deux couleurs distinctes, les lignes de pixels s'étendant selon la deuxième orientation.

4. Dispositif selon la revendication 3, dans lequel les lignes de pixels sont arrangées de façon périodique dans la couche holographique.

5. Dispositif selon la revendication 3 ou 4, dans lequel les lignes (LN) de pixels sont arrangées par groupe (GP) de lignes de pixels dans chaque couleur parmi la base (BC) d'au moins deux couleurs distinctes, chaque groupe (GP) comprenant une pluralité de lignes de pixels dans une même couleur parmi ladite base d'au moins deux couleurs distinctes,
les lignes de pixels étant arrangées périodiquement dans chaque groupe.

6. Dispositif selon la revendication 5, dans lequel les lignes (LN) de pixels sont arrangées spatialement dans chaque dit groupe selon un pas (D1) séparant chaque paire de lignes de pixels adjacentes, tel que P ≤ 100 µm.

7. Dispositif selon l'une quelconque des revendications 1 à 6, dans lequel la couche texturée (4) présente une température de transition vitreuse supérieure ou égale à celle du support.

8. Dispositif selon l'une quelconque des revendications 1 à 7, dans lequel la couche texturée (4) et le support (6) sont formés d'un même matériau ou d'un même ensemble de matériaux.

9. Dispositif selon l'une quelconque des revendications 1 à 8, dans lequel la couche holographique (8) se **caractérise par** des propriétés optiques de diffraction qui sont fonction des deuxièmes macro-texturations (11) formées par lamination selon un motif en relief imposé par les premières macro-texturations (10) de la couche texturée.

10. Dispositif selon l'une quelconque des revendications 1 à 9, dans lequel les pixels (16) dudit arrangement de pixels comportent chacun une pluralité de sous-pixels (18) de couleurs distinctes dans la base (BC) d'au moins deux couleurs distinctes,
le dispositif comprenant une couche de personnalisation (40) positionnée en regard de la couche holographique (8),
dans lequel la couche holographique comprend des perforations (30) formées par un rayonnement laser (LS1), lesdites perforations révélant localement au travers de la couche holographique des zones de nuance colorimétrique (32) dans les sous-pixels causées par des régions sous-jacentes (31), de la couche de personnalisation (40), situées en regard des perforations (30), de sorte à former une image holographique personnalisée (IG1a) à partir de l'arrangement (15) de pixels combiné aux zones de nuance colorimétrique (32).

11. Dispositif selon la revendication 10, dans lequel la couche de personnalisation est l'une parmi :
- la couche texturée (4) ; et
- une couche (40) positionnée en regard de la couche holographique (6) de sorte que la couche texturée est intercalée entre la couche holographique et la couche de personnalisation.

12. Dispositif selon la revendication 10 ou 11, dans lequel ladite couche de personnalisation (40) est opaque vis-à-vis au moins du spectre de longueurs d'onde du visible, les zones de nuance colorimétrique (32) causées par les régions sous-jacentes (31) de la couche de personnalisation étant des zones sombres dans les sous-pixels (18).

13. Document sécurisé (20) comprenant :
- un corps de document (22) ; et
- un dispositif optique (2) selon l'une quelconque des revendications 1 à 12 intégré en tant que dispositif de sécurité dans ou sur le corps de document.

14. Procédé de fabrication d'un dispositif optique (2), ledit procédé comprenant :
- formation (S2) d'une couche texturée (4) comprenant une première surface présentant des premières macro-texturations (10); et
- positionnement (S4) de la première surface de la couche texturée en vis-à-vis d'un support (6) comprenant en surface une couche holographique (8) intercalée entre la couche texturée et le support,
- la couche holographique (8) comprenant un réseau diffractif formant par effet holographique un arrangement (15) de pixels (16) dans une base (BC) d'au moins deux couleurs distinctes ; et
- lamination (S6) de la première surface de la couche texturée sur le support, causant une déformation par les premières macro-texturations (10) de la couche holographique (8) disposée entre la couche texturée et le support, de sorte à former dans la couche holographique (8) des deuxièmes macro-texturations (11) conformes auxdites premières macro-texturations, l'apparence visuelle de l'arrangement (15) de pixels étant personnalisée par les deuxièmes macro-texturations (11),
dans lequel les deuxièmes macro-texturations (11) de la couche holographique (8) sont de forme semi-cylindrique ou elliptique et s'étendent selon une première orientation (O1) dans le plan de la couche holographique,
chaque pixel (16) étant formé par une portion correspondante du réseau diffractif, ladite portion correspondante étant structurée en lignes diffractives (LD) s'étendant selon une deuxième orientation (O2) perpendiculaire à la première orientation (O1) dans le plan de la couche holographique.
